# EUROPEAN PATENT APPLICATION

(11) **EP 1 422 901 A1**
(43) Date of publication of application: **26.05.2004**
(21) Application number: 02026354.7
(22) Date of filing: 22.11.2002
(51) Int. Cl.: H04L 29/06

(54) **Client driven synchronization of file and folder content in web publishing**

(71) Applicant: SUN MICROSYSTEMS, INC., Palo Alto, California 94303 (US)
(72) Inventor: Sandoz D. Paul, Dublin 2 (IE); Kovacs Laszlo, Dublin 4 (IE)
(74) Representative: HOFFMANN - EITLE

(57) **Abstract**

A method and system for synchronizing content between two content sources, in particular a local source, for example at a palmtop or laptop device serving as a client device, and a remote source, for example at a remote server device. The synchronization is driven from the client device and involves employing a profile which indicates content, such as files and folders, to be synchronized, identifying the content of the local and remote sources corresponding to the profile, determining the differences between the identified content of the two sources, and calculating the operation required to be applied to the two sources to synchronize their content. To facilitate the determination of which files and folders have been modified, added or deleted, a cache stores information concerning the state of both content sources following a previous synchronization, and the difference determination includes comparison of the identified content of the local and remote sources to be synchronized and the cached information.

## Description

### Field of the Invention

The invention relates to the synchronization of file and folder content over a network and in particular to distributive synchronization and access of file and folder content and to methods and systems for providing such synchronization and access.

### Background of the Invention

Desktop systems provide a common and well understood model for file and folder content access. A user may employ a command line shell or a GUI (graphical user interface) tool, that is a browser, to access local or remote files and folders. Desktop applications, such as office productivity suites or even simple text editors, will use the same model to allow a user to view and edit file content. The logical progression of this is to extend and change this common model to a distributive model whereby files and folders may be accessed over the Internet anywhere, on any device and at any time.

The change to a distributive model is already starting to take place. A number of companies exist that offer the service of central storage of files and folders and remote access to them. These may offer Internet, or Web, based access to files and folders, as well as other services based on access to and operations on files and folders. Applications exist that make use of the distributive model to enable access to files and folders. These may be client side applications that enable remote access and automatic synchronization of files and folders from a personal computer (client) to a centralized storage service. Alternatively, there may be a server side infrastructure for centralized storage and remote access. Web authoring software exists that enables web developers to edit web content locally and then synchronize the associated files and folders to a centralized location. A particular example of the latter is GoLive a product of Adobe Systems Incorporated which is commonly used with an Apache HTTP web server using a "mod-dav" module, since both GoLive and the module, support the WebDAV protocol for remote file and folder access. (GoLive and ADOBE are trademarks of Adobe Systems Incorporated.) This combination enables multiple web developers to work collaboratively on web development over the Internet, in much the same way as software engineers may work collaboratively on code.

The WebDAV (Web-based Distributed Authoring and Versioning) standard defines HTTP (hypertext transfer protocol) extensions which allow users to collaboratively edit and manage files on remote web servers and are necessary to enable distributed web authoring tools to be broadly interoperable, while supporting user needs. In this respect DAV is completing the original vision of the Web as a writeable, collaborative medium. HTTP gives read access, whereas DAV gives write access.

Distribution brings with it a number of requirements. Firstly, the different client devices which may be involved have different capabilities. The client device types may range from mobile phones, PDAs (personal digital assistants), laptops and workstations. Depending on their capabilities these client devices may use the file and content functionality differently. Mobile phones may only have the capability to manipulate remotely the name space of files and folders, for example moving, copying and deleting, and selecting files for a remote operation, such as printing or emailing as an attachment. PDAs may be able to access remote file content such that it may be edited locally. However, some content may have to be transformed to a suitable format for local modification and then transformed back to the original format when the locally modified content is stored back at the remote location.

Laptops and workstations may require efficient access to many files and folders stored remotely, thus the files and folders need to be accessed locally and changes to the files and folders sent back to the central location automatically.

Devices may not be on-line all of the time, or devices may not be able to access the relevant services. Thus off-line access to files and folders stored locally on the device may be required where the selected files and folders are replicated from central storage accessed over the network, when changes are made locally either to the name space, renaming a file or folder, or the contents of a file has changed, the file having been modified by a local application. These changes must be reflected at the central location at some point in time, and likewise for changes made at the central location/storage by other devices and users while the device was off-line. This is commonly referred to as synchronization. Before a device goes off-line the files and folders selected for off-line use will be synchronized with the existing central location version and represented locally. When the device goes on-line the same process occurs.

A user may have many devices and with the Internet there will be many other users. With suitable access rights many users and devices may share file and folder content for collaborative operation. This is a common pattern when concepts are extended to the Internet, for example chat, messaging and collaborative development of computer software. Messaging, calendering and workflow may require the sharing of files and folders between multiple users.

Synchronization of files and folders enables a device efficiently to access and modify files and folders stored locally, which correspond to files and folders stored centrally and reflect changes between the device and central storage such that the files and the folders are the same on both.

Commonly this is used for off-line use where the device is no longer connected to the network or cannot get access to the associated network service.

Different devices may have different synchronization requirements. For example, PDAs may have no concept of generic folders and files are associated with a specific application. In addition, limited memory requirements may mean that careful selection of files may be necessary. This also implies that the set of files synchronized may change, depending on the associated set of tasks a user needs to perform and what applications are required to perform the tasks locally. In contrast, a workstation or laptop may support the complete set of files and folders stored centrally, thus no selection of what to synchronize may be needed.

Synchronization of files and folders may be considered as an automated form of file and folder access. It is essentially a higher level service.

A synchronization application for synchronizing content at a local and a remote device will generally involve the installation of specialized synchronization software at the local device and at the remote device, to enable the devices to communicate with one another for synchronization purposes. This, however, requires modifications to both, the local device and the remote device, which may be impractical or even impossible, for example, if the remote device is a content server in the world wide web and not accessible for an operator of a local device who would like to install and use synchronization software.

### Summary of the Invention

It is therefore desirable to provide for achieving synchronization of hierarchical files and folders suitable for many types of client devices (user environment devices) and server devices and to achieve this adaptable and sufficiently efficient to be applied to smaller client devices, such as PDAs.

According to an exemplary embodiment a method of synchronizing content between a local content source and a remote content source, disposed at a user environment device and a server device, respectively, includes indicating a profile identifying the content to be synchronized; comparing the profile with the local and remote content sources and identifying differences therebetween, and, in dependence on the identified differences, synchronizing the content of the content sources.

According to an advantageous embodiment, the synchronization is initiated at the user environment device and the comparison of the profile with the local and remote content sources produces, for each content source, a respective list of meta-data items, in a predetermined order, relating to the content to be synchronized. The method may include iterating through the lists to identify the differences therebetween, and in dependence on the identified differences, determining operations to be carried out to synchronize the content of the content sources, and applying the determined operations to the local and/or remote content sources.

In another example the meta-data items include at least one of the following, namely: relative path name, date last modified, profile index, content size, content type, message digest.

Further, according to another embodiment, the method includes comparing the items of the lists and a cache, corresponding to a previously synchronized state of the local and remote content sources, to identify differences between the lists and the cache, and updating the cache to the resultant new synchronized state of the local and remote content sources. The cache may be maintained locally at the user environment device or at a remote location.

According to another embodiment, if a conflict arises during item and cache comparison, this conflict is resolved by use of a predetermined conflict policy that indicates the operation to be applied. Alternatively, a conflict may be resolved by a dynamic conflict resolution involving receiving user instructions at the user environment device determining the operation to be applied. The operations may comprise modify, add or delete operations.

According to another embodiment, the profile is used to select the local and remote content to be compared, the profile being generated using a graphical user interface of the user environment device. Alternatively the profile is generated from a history of content downloaded to the client device, e.g. by user instructions. Such a graphical user interface may additionally or alternately be used by the user to indicate a profile, or to indicate an operation to be applied as part of the dynamic conflict resolution. Indicating a profile may comprise selecting a profile from a set thereof, or choosing a selection of profiles from the set.

In particular, the content may be hierarchical file and folder content. The local content source may be a file system in memory, and the remote content source may be a network file system or a database.

According to another embodiment, the user environment device is be a client device such as a laptop computer, a palmtop computer or a personal digital assistant. The server device may be a WebDAV server or an HTTP server or similar.

According to another embodiment, a data processing device includes a user environment content source connectable to a server device having a server content source at least for synchronization of the user environment and server content sources; a memory, comprising a synchronization program for detecting differences between selected portions of the user environment and server content sources and determines operations to be applied to the user environment and server content sources to achieve synchronization, and applying the operations; and a processor that runs the synchronization program when the user environment device and server device are connected and synchronization is initiated.

According to another embodiment, the data processing device further includes profile storing means containing a profile defining said selected portions of the content sources to be submitted to the synchronization program for difference detection.

According to another embodiment, the data processing device further includes a cache storing details of a previously synchronized state of the user environment and server content sources.

According to another embodiment, the synchronization program serves to: compare a said profile with the user environment and server content sources; to produce respective lists of meta-data items in a predetermined order of the content to be synchronized for each content source; to iterate through the lists and compare the items thereof and the cache, to identify differences between the lists and the cache; to determine the said operations in dependence on the identified differences; to apply the said operations to the user environment and/or server content sources; and to update the cache to the resultant new synchronized state of the user environment and server content sources.

According to another embodiment, the data processing device further includes said operation comprises at least one of:
a modify operation, an add operation, and a delete operation.

According to another embodiment, the synchronization program serves to: compare resource locators of the server or client content source with the cache; compare the meta-data thereof, if the resource locators are the same, to determine whether the content item was modified; and compare the order of the server or client content source and the cache, if the resource locators are not the same, to determine whether the content item was added or deleted.

According to another embodiment, the data processing device further includes a graphical user interface to generate said profile.

According to another embodiment, the synchronization program further serves to resolve conflicts arising during item and cache comparison in accordance with predetermined conflict policies that indicate the respective operation to be applied.

According to another embodiment, the data processing device further includes a graphical user interface for resolving a conflict arising during item and cache comparison by indicating the operation to be applied.

According to another example, a program may be provided having instructions adapted to carry out the above method examples. Further, a computer readable medium may be provided in which a program is embodied which is to make a data processing system, including a user environment device and a server device, execute the above methods. Still further, a computer program product may be provided comprising the computer readable medium.

Further features of the invention are disclosed in further claims.

This summary is not intended to limit the scope of the invention, which is defined solely by the claims attached hereto.

### Brief Description of the Drawings

Embodiments of the invention will now be described with reference to the accompanying drawings, in which:
- Fig. 1: illustrates a basic system for file and folder synchronization according to the present invention;
- Fig. 1a: illustrate a basic operations for file and folder synchronization according to the present invention;
- Fig. 2: illustrates WebDAV synchronization between a client and a server;
- Fig. 3: illustrates synchronization employing a difference calculation according to an embodiment of the present invention;
- Fig. 4: illustrates synchronization using a difference calculation according to an embodiment of the present invention in greater detail than in Fig. 3;
- Fig. 4a: illustrates elements of the difference calculation according to an embodiment of the present invention in greater detail than in Fig. 4;
- Fig. 5: shows operations of a method for providing synchronization according to an embodiment of the present invention and for an initial synchronization of local and remote content sources;
- Fig. 6: illustrates operations of a method according to an embodiment of the present invention for providing synchronization of local and remote content sources following an initial synchronization; and
- Fig. 7: illustrates operations of a method for determining a status of content according to an embodiment of the present invention.

While specific embodiments are described and illustrated herein, these embodiments are not intended to limit the scope of the invention, which is susceptible to various modifications and alternative forms.

### Detailed Description of the Preferred Embodiments

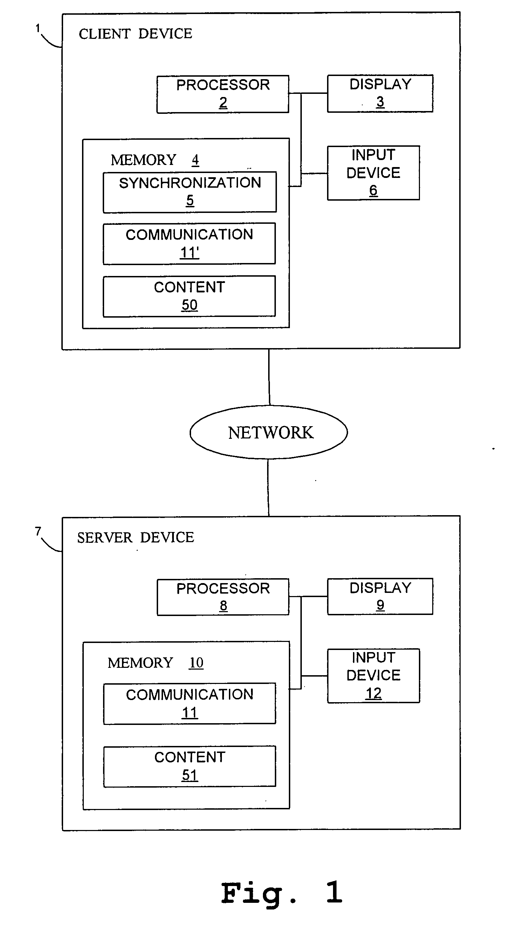

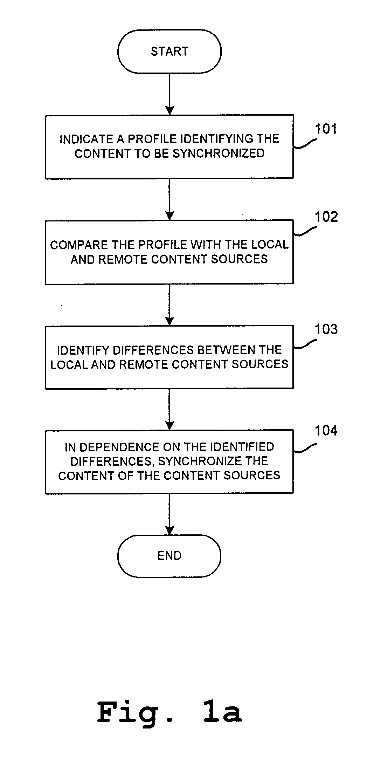

A first embodiment of the invention will be described with respect to Fig. 1.

Fig. 1 illustrates a basic data processing system comprising a client device 1, such as a laptop or PDA, including a processor 2, a display 3, a memory 4 and an input device 6. Fig. 1 further illustrates a server device 7 including a processor 8, a display 9, a memory 10 and an input device 12. The client device 1 and the server device 7 may communicate via any kind of communication link, e.g. a network and/or a dedicated communication line.

Further to the above, the memory 4 at the client device 1 includes a synchronization program 5 and the client device includes a user environment content source 50 and the server device includes a server content source 51, the client device and server being connectable at least for synchronization of the user environment content source 50 and server content source 51 using the synchronization program 5. The synchronization program 5 stored in the memory of the client device is provided for determining differences between selected portions of the user environment and server content sources and for determining operations to be applied to the user environment and server content sources to achieve synchronization, and the processor 2 of the client device 1 runs the synchronization program 5 when the user environment and server devices are connected and synchronization is initiated from the client device.

As the server device does not include any elements of the synchronization program, and since synchronization can be initiated and performed from the client device, it is not required that the server device is specifically modified for the synchronization purposes. Accordingly, a client device equipped with the synchronization program 5 can synchronize content with any server device including server devices in the world wide web.

In an alternative, optional to the elements outlined above, to facilitate the synchronization operations between the user environment content source 50 and server content source 51, the memory 4 of the client device includes a client communication program 11' and the memory 10 of the server device 7 includes a server communication program 11. The communication programs enable the client device to communicate requests for access to content at the server device and to enable the server device to correspondingly manipulate the desired content, including transmitting data back to the client device.

The client communication program 11' and server communication program 11 may include or constitute an authoring facility.

An authoring facility can be any means allowing access, from a local device to data at a remote device, e.g. from the client device 1 to content of the server content source at the server device 7. Access to data can include a creation, editing and/or searching of content at the remote location. The authoring facility may include functional elements at the local device and at the remote device, e.g. to enable the local device to communicate user requests to access content to the remote device and to enable the remote device to correspondingly manipulate the desired content, including transmitting data back to the local device. In the present case the functional elements may be constituted by the client communication program 11' and the server communication program 11. The functional elements may be constituted by software components, but alternatively or in addition thereto also by hardware components.

Distributed computing environments generally include authoring facilities, an example being WebDAV (Web Distributed Authoring And Versioning). WebDAV uses the HTTP protocol (HyperText Transport Protocol), the communications protocol used to connect local devices to servers on the World Wide Web. The primary function of HTTP is to establish a connection with a Web server and transmit HTML pages to the local device, e.g. by using a browser application. WebDAV provides enhancements to the HTTP protocol that turn the Web effectively into a content database that enables collaborative creation, editing and searching from remote locations. WebDAV was standardized by the IETF, and enables documents to be written via HTTP, as HTTP normally only supports reading. It also allows documents to be assigned properties, or attributes, that can be searched using the DAV Searching and Locating (DASL) protocol.

In the present case the client communication program 11' and the server communication program 11 may form the WebDAV and/or HTTP program, such that the server acts as a WebDAV or HTTP server as known in the art. However, it is noted that any other communication and/or authoring facility may be employed.

Accordingly, the synchronization program 5 can employ the communication programs 11 and 11' in executing the synchronization operations required by using standard functionality for accessing, i.e. creating, editing and/or searching content a the server content source for synchronization purposes.

Thus, synchronization according to the present example can make use of any underlying standard file and folder access services of a communication application such as an authoring facility and various forms of synchronization services may be developed based on the device and user requirements. The fundamental file and folder access concepts do not need to be change, the appropriate features of the service may be used directly by a device or by the synchronization program 5 at the client device 1. A user of the client device can therefore conveniently set up his device for remote synchronization, without having to modify or adapt the server device.

In the following further examples of the elements of the system shown in Fig. 1 are outlined in further detail. It is noted that the following constitutes examples only and should not be construed as limiting the invention.

First the client device will be described in further detail.

The client device 1 may generally be constituted by a general purpose computing device such as a workstation, a personal computer, a laptop, palmtop computer, a PDA (Personal Digital Assistant) and similar. In an embodiment, the client may further offer facilities to e.g. view, generate or modify content available on the server device 7, e.g. a communications program and/or authoring facility, as outlined above..

The memory 4 at the client device 1 may be any kind of internal memory of the client device, such as a random access memory, a magnetic storage device such as a hard drive or floppy disc, an optical storage device and similar. Alternatively or in addition thereto the memory 4 may be external to the client device 1 and accessed by the client device via a communication link.

The memory 4 stores code sections of the synchronization program 5, i.e. code sections including instructions to realize the functionality for determining differences between selected portions of the user environment and server content sources and for determining operations to be applied to the user environment and server content sources to achieve synchronization. Further, the memory 4 stores code sections of the communication program 11', i.e. code sections including instructions to realize the functionality for enabling the client device and the server device to communicate including the authoring facility.

The processor 2 of the client device, provided for running the synchronization program, the communication program and possibly further operating programs and/or application programs, may be any kind of central processing unit of the client device or a group of processing units. Alternatively or in addition thereto the processor 2 may at least include external processing resources accessible from the client.

The display 3 of the client 1 can be any kind of display device connected or associated with the client device such as a CRT or any kind of flat screen type display device, e.g. TFT DSTN etc.

The input device of the client device may include any kind of input unit for inputting information, such as a keyboard and mouse, or a port for realizing a communication to external devices such as the server device or further computing devices.

In the following the server device will be described in further detail.

The server device 7 may generally be constituted by any kind of computing device, preferably, however, by computing devices having large storage, processing and communication capacity. Thus, the server device 7 may be constituted by any server device or group of server devices, e.g. for providing any kind of content to a client upon a user request.

The memory 10 at the server device 7 may be any kind of internal memory of the server device, such as a random access memory, a magnetic storage device such as a hard drive or floppy disc, an optical storage device and similar. Alternatively or in addition thereto the memory 10 may be external to the server device 7 and accessed by the server device via a communication link.

The memory 10 stores code sections of the communication program 11, i.e. code sections including instructions to realize the functionality for enabling the server device and the client device to communicate for synchronization purposes.

The processor 8 of the server device, provided for running the communication program and possibly further operating programs and/or application programs, may be any kind of central processing unit of the server device or a group of processing units. Alternatively or in addition thereto the processor 8 may at least include external processing resources accessible from the server.

The display 9 of the server device 7 can be any kind of display device connected or associated with the server device such as a CRT or any kind of flat screen type display device, e.g. TFT DSTN etc. In alternate embodiments the server device does not necessarily include a display device.

The input device of the server device may include any kind of input unit for inputting information, such as a keyboard and mouse, or a port for realizing a communication to external devices such as the client device and/or further computing devices.

The server device and the client device communicate over any kind of communication link, including computer networks, such as local or wide area networks, including the Internet, including dedicated communication links. Thus, the server device may be arranged at a remote location and communicate with the client device over the computer network or dedicated communications link. According to an embodiment, the client device only connects to the server device and initiates a synchronization, when synchronization of the respective contents is desired. This enables off-line use of the client device, e.g. if a permanent link to the server device is not possible or not desired.

As noted above, the client device includes a user environment content source. The content source may be any source of information for presentation to a user. The user environment content source may be provided on the memory 4 of the client device, i.e. as content stored on a partition of the memory 4. Similarly, the server device includes a server content source comprising any kind of content in correspondence to the user environment content at the client device. The server content source may be provided on the memory 10 of the server device, i.e. as content stored on a partition of the memory 10. Alternatively the respective content at the client and server may be provided from an external source. The term 'content' is used here to describe any information that is available for retrieval from a data processing device, e.g. by a user at a client. Content may include information and data constituted by Web pages, images, music, audio, white papers, driver and software downloads as well as training, educational and reference materials and similar.

According to an embodiment the content may be stored in local file and folder system at the client device and in a corresponding remote file and folder system at the server device.

Further, in an example, the server device may be constituted by a server or webserver connected to the client device over the Internet to allow synchronization of content for a user through e.g. the World Wide Web on the Internet.

According to another embodiment, the system of Fig. 1 may operate as illustrated in Fig. 1a.

In the embodiment of Fig. 1a the user environment content source 50 is assumed to be a local content source and the server content source 51 is considered to constitute a remote content source. For example, the local content source could be a local file and folder system and the remote content source could be a centrally hold file and folder system e.g. for one user or for a group of users, e.g. of a department and similar.

In an operation 101, for synchronizing content between the local content source and the remote content source, disposed at the client device 1 and the server device 7, respectively a profile identifying the content to be synchronized is indicated. Then, in an operation 102, the profile is compared with the local content source 50 and remote content source 51 and in an operation 103 differences between the local and remote content sources are identified. In dependence on the identified differences, in an operation 104, the content of the content sources is then synchronized.

The above operations will be carried out at the client device, however, in an alternative it is also conceivable to carry out the above operations at the server device or at a further computing device connected to the server and/or the client device.

According to another alternative, during comparing the profile with the local and remote content sources and for each content source, a respective list of meta-data items is produced, in a predetermined order, relating to the content to be synchronized. Further, it is then iterated through the lists and comparing the meta-data items thereof to identify the differences therebetween and, in dependence on the identified differences, operations are determined to be carried out to synchronize the content of the content sources. The determined operations may then be applied to the local and/or remote content sources.

The meta-data items may for example include a relative path name, date last modified, a profile index, a content size, content type and/or message digest and the comparison of the lists may include comparing the meta-data items thereof and a cache, the cache corresponding to a previously synchronized state of the local and remote content sources, to identify differences between the lists and the cache. The cache may be updated to the resultant new synchronized state of the local and remote content sources. The cache may be maintained locally at the client device.

If a conflict arises during item and cache comparison, this conflict may be resolved by use of a predetermined conflict policy and/or dynamic conflict resolution involving a user indicating the operation to be applied. This may involve a modify operation, an add operation and/or a delete operation.

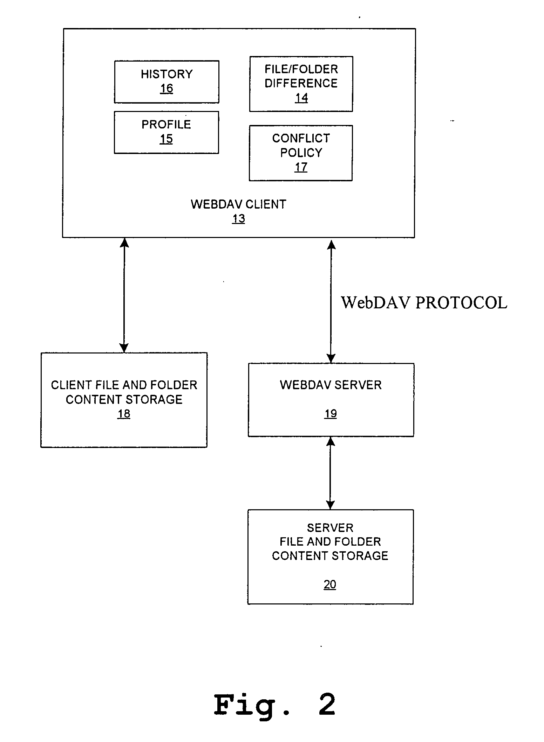

In the following a particular embodiment of the invention will be described with reference to Fig. 2.

The embodiment of Fig. 2 illustrates an architecture overview of a system for synchronization using WebDAV, offering an approach suitable for the synchronization of files and folders.

The WebDAV server 19 has the ability to centrally store file and folder content at 20, for example on an NFS (Network File System) server or in a database. The WebDAV client 13 has the ability to communicate with the WebDAV server 19 using the WebDAV protocol. In this scenario preferably the client drives the synchronization process. The client calculates local and remote file and folder differences from a profile 15, using a file and folder difference program 14. The profile may be generated from a history 16 of remote file and folder accesses and may include references to specific files at the server 19. Thus; the profile 15 can be used to obtain remote file and folder information from the WebDAV server 19, such as a relative path name, a date last modified, a profile index, a content size, a content type and/or a message digest. The client calculates conflicts from the differences and using conflict policies 7, resolves conflicts and generates a list of file and folder operations to be performed. The client then applies the list of operations using the WebDAV protocol such that the client and server are synchronized accordingly. Thus the client performs the synchronization calculations. However, it is also conceivable that the synchronization operations are initiated and/or performed at the server device.

The various functional blocks of the WebDAV client 13 will now be explained in greater detail.

Synchronization is performed by first obtaining a profile 15 that defines what needs to be synchronized. The profile contains a list of files and folders that are stored remotely at 20 in association with the WebDAV server 19 and a mapping to the files and folders 18 stored locally at the client device. The profile may be as simple as defining a root folder on the server and the mapping to where the synchronized folder should reside, that is on another root folder in the local name space. The profile represents a binding between the client device and the WebDAV server.

The history 16 allows to generate a profile from files and folders which have been browsed. For example, every time a file or folder content is obtained from the WebDAV server and stored locally at the client device, the remote and local locations could be added to a special history profile. This could be achieved by a history program which detects accesses to files and folders and records information on the accesses in the history 16. This profile can then be used to synchronize the files and folders. Generating profiles from history allows for a dynamic approach to file and folder synchronization that is driven from the client device and user actions.

Given a profile it is possible to calculate the differences between the local and remote files and folders. For example, it is possible to ascertain if a file has been locally modified and requires sending back to the remote location such that the file is synchronized. Meta-data properties associated with files and folders, for example size and date last modified, in conjunction with hierarchical comparison can be used to identify what the client needs to do to ensure that both local and remote files and folders are synchronized. The client needs to obtain the meta-data properties using a WebDAV method, which may also be used to efficiently obtain all hierarchy associated with a folder.

When difference calculation is performed, there may be conflicts between the local and remote files and folders. Remote files and folders may be modified independently by the same user using a different device, or by another user, if shared access is available. Conflicts can arise, for example, when a user deletes a file locally that has been modified remotely. Three choices are possible for this type of conflict: nothing is done; the file gets deleted remotely; the remote file gets stored locally. A conflict policy 17 will define what action should be taken when a certain conflict occurs, in order to resolve the conflict.

It is important to note that a conflict with respect to files and folders represents a conflict on the hierarchy and file and folder properties, essentially the meta-data and relationships between files and folders. It does not define what conflicts arise within the file content. A conflict will only define that a local and a remote file have both been modified independently and thus that there may be inter-content conflicts and the two files may require merging and user intervention to resolve differences.

Further information on WEBdav may be obtained from "HTTP Extensions for Distributed Authoring -- WEBDAV", RFC 2518, Standards Track, Proposed Standard. February, 1999. and from " Versioning Extensions to WebDAV (Web Distributed Authoring and Versioning)" RFC 3253, Standards Track, Proposed Standard. March, 2002.

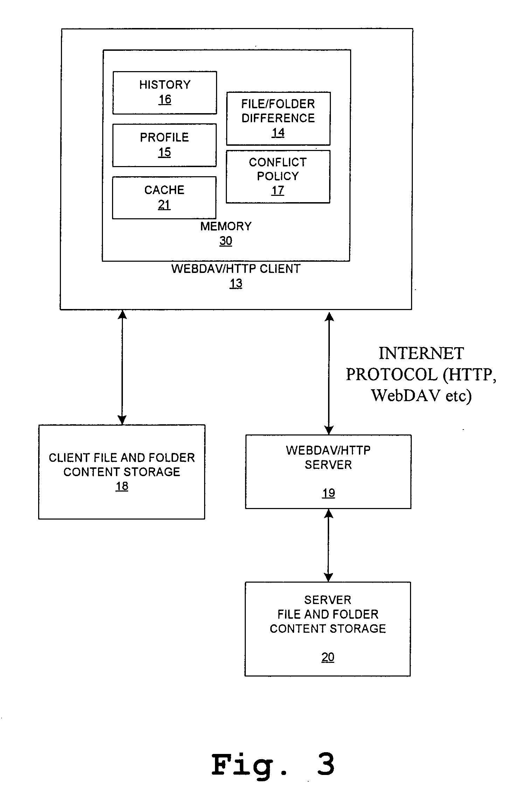

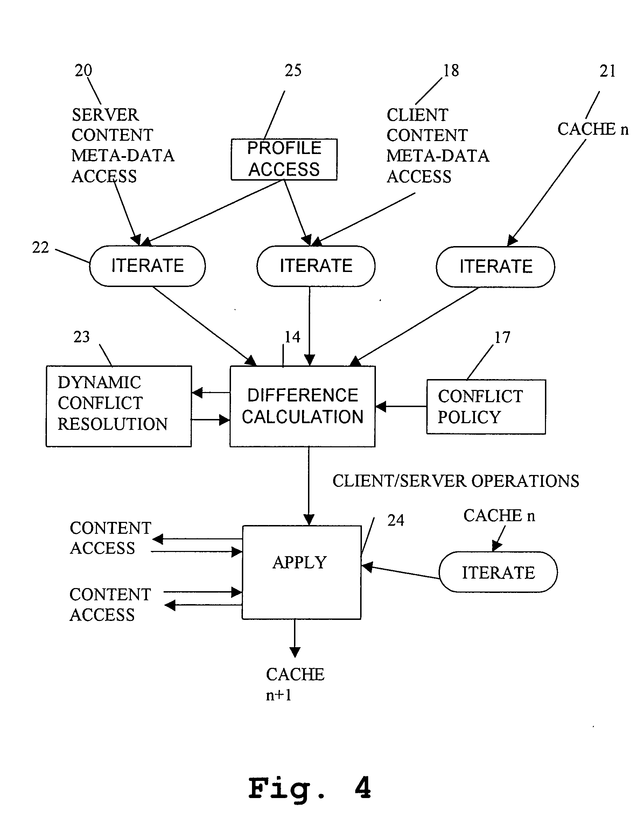

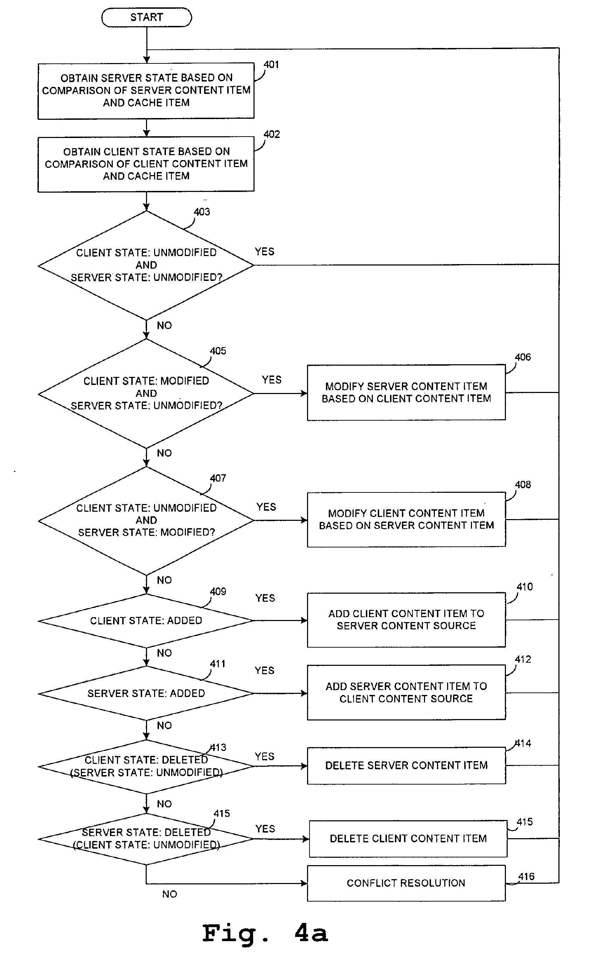

In the following another embodiment of the invention will be described with reference to Figs. 3 and 4. While Fig. 3 shows elements of a system for content synchronization, Fig. 4 illustrates graphically the interaction of the elements of Fig. 3 on a functional level.

The embodiments of Fig. 3 and 4 are particularly concerned with a hierarchical content synchronization algorithm, that is an algorithm which enables the synchronization of hierarchical content between two sources of content. Synchronization results in the same content on both content sources. The algorithm may be applied to the synchronization of file and folder content between a local file system on a laptop or workstation and a remote file system that is accessible using standard Internet protocols.

The process of synchronization employs a two-tier approach. Firstly, the differences between the content from two sources are identified and a set of operations are calculated according to a set of policies. The set of operations is then applied to the content sources such that both sources share the same content.

Fig. 3 is illustrated in a similar architectural form to that of Fig. 2 and relates to the algorithm for hierarchical content synchronization.

Fig. 3 illustrates a server 19 and a file and folder content 20. The server 19 may be substantially configured as the server device 7 outlined with regard to previous embodiments, with the additional ability to be used, e.g. in the WebDAV/HTTP environment. The server 19 has the ability to centrally store information at the file and folder content 20. The file and folder content 20 may, for example, be available NFS (Network File System) server or in a database or any other storage medium. The file and folder content 20 may be arranged remote from the server 19 or may form an integral part thereof.

Further, Fig. 3 illustrates a client 13 communicating with the server 19 using e.g. the WebDAV protocol or HTTP. The client 13 may be substantially configured as the client device 1 outlined with regard to previous embodiments, with the additional ability to be used in the WebDAV/HTTP environment.

Further, Fig. 3 illustrates a file and folder content storage 18. The file and folder content store 18 may, for example, be available on a memory accessible by the client, I.e. in a database or any other storage medium. The file and folder content 18 store may be arranged remote from the client 13 or may form an integral part thereof.

The memory 30 stores a file/folder difference calculation program 14 and information related to a profile 15 identifying the content to be synchronized, conflict policies 17, as outlined with regard to Fig. 2. The profile may be generated based on the history 16, however, other techniques for obtaining the profile may be used.

Further, in the present embodiment, a cache 21 is provided for storing a previously synchronized state of the local and remote content sources and may be provided on a memory of the client 13 or at an external location. The previous synchronized state of content, i.e. the files and folders, available in the cache facilitates a determination of the changes which occurred to the content at the client and/or the content at the server. When comparing the content at the server with the cache, any detected differences indicate content changes occurred at the server file and folder content storage since the last synchronization. Likewise, when comparing the content at the client with the cache, any detected differences between the content at the client and the cache indicate content changes occurred at the client file and folder content storage since the last synchronization.

It is noted that in an alternative to the file/folder difference calculation program 14, e.g. executed on a processing unit of the client 13, the functionality of the programs and/or the data of the profile 15, of the conflict policies 17 and of the cache 21 could at least partially be realized using hardware components.

The server 19, which may be a WebDAV or HTTP content access server, has file and folder content store 20, e.g. as it was outlined with regard to Fig. 2.

During operations, synchronization is performed by first obtaining a profile 15 that defines what needs to be synchronized, e.g. using the history 16 or any other means to obtain or provide a profile. The profile contains a list of files and folders that are stored remotely at the server file and folder content storage 20 in association with the WebDAV server 19 and a mapping to the files and folders stored locally/accessible at the client device at the client file and folder content storage 18. Generally, the profile represents a binding between the client and the server. For example, the profile may be as simple as defining a root folder on the server and the mapping to where the synchronized folder should reside, that is on another root folder in the local name space.

As outlined above, the history 16 and an associated history program present a mechanism to generate a profile from files and folders which have been browsed or accessed. For example, every time a file or folder content is obtained from the server and stored locally at the client device, the remote and local locations could be added to the history 16. The history can thus constitute a file or data structure representing the history of user accesses, including necessary information to locate the respective content files, such as URIs, addresses or any other identifiers. This profile can then be used to synchronize the files and folders, as it identifies accessed content.

In an example the profile is generated from a history of content downloaded to the client device, e.g. by user instructions. A graphical user interface may additionally or alternately be used by the user to indicate a profile, or to indicate an operation to be applied as part of the dynamic conflict resolution. Indicating a profile may comprise selecting a profile from a set thereof, or choosing a selection of profiles from the set.

Generating a profile from the history program allows for a dynamic approach to file and folder synchronization that is driven from the client device and user actions.

Given the profile 15 it is possible to calculate the differences between the local and remote files and folders. For example, it is possible to ascertain if a file has been locally modified and requires sending back to the remote location such that the file is synchronized. In an example the differences are calculated by comparing, item by item, the content stored at the client and at the server, as indicated by the profile 15.

The client is able to communicate with the server using a suitable communications protocol, WebDAV for example, as discussed above. However, in alternative examples the client and server may use other communication schemes, such as HTTP.

In the following the interaction of the elements of Fig. 3 on a functional level will be described with regard to Fig. 4.

The difference calculation operation 14, as illustrated in Fig. 4, takes three inputs related to meta-data on content such that it is possible to iterate over the meta-data of content items in a defined order. The meta data, as outlined before, may include a relative path name, a date last modified, a profile index, a content size, a content type and a message digest.

Two inputs correspond to the two sources of meta-data, server and client content sources 20 and 18. The iteration operations 22 through the content at the server and client, providing the two inputs, are driven based on profile accesses 25 that define, based for example on the profile 15, what content between the two sources should be synchronized. The profile contains, e.g. a set of URI (Universal Resource Indicator) pairs that represents a content mapping. A URI may represent a tree or leaf node. If the former is represented then the iteration will expand the tree node recursively for all leaf nodes in alphabetical or any other order. In its canonical form, the profile contains either leaf or tree nodes that are not members of the tree node entries in the profile. Each iteration item for the two sources contains a URI, to identify the content, and meta-data associated with it.

The third input to the difference calculation 14 is from the cache 21, which corresponds to the meta-data between the two sources for the n^{th} synchronization, which is the last synchronization performed. A cache iteration 22 item will contain a pair of items that correspond to the same type as the respective content source iteration item.

By using iterations through the respective content and through the cache ensures that the difference calculation is not bound to any type of content meta-data access, and since the order of items in the iteration is pre-defined the calculation can "traverse" the items in an efficient logical forward sequence that requires no marking and backward seeking. This means it very efficient for synchronizing large quantities of content because no search is required and the cache is not required to be all in memory. Alternatively, however, other schemes may be used, such as based on marking and concurrently retrieving items based on the marking. The iterations may be performed by programs and/or hardware elements, preferably resident at the client.

In an embodiment the iteration operations generate respective lists of content items for use in the synchronization operations. The lists can be generated concurrently or at different points in time, as desired.

The difference calculation 14, e.g. performed by a difference calculation program, will then be used to iterate through the three inputs and compare their meta-data and may proceed through each iteration 22 at different rates depending on what has been newly added, deleted or modified. Identification of the state of each content item is determined by comparing the current meta-data with the corresponding data in the cache 21, if it exists. Based on the states of the content items at the client content source and the server content source appropriate actions are selected to bring the respective content items into a synchronized state. This can include applying modifications to a corresponding content item at the server or client content source or performing deletions of content items or additions.

Once the set of actions has been calculated, they may be applied using an apply operation 24. The apply operation may be any process to apply the appropriate modifications, deletions and additions to the server content source and the client content source. Each action will contain the URIs in question and a direction, source and target, of where the content is being directed to ensure a synchronized content item.

The apply operation 24 also takes the cache 21 as input, so that it may use it to calculate the new cache appropriate from the applied operations. An apply of an operation may result in modification, deletion or addition of the cache. At the end of a successful apply, the two content sources 20 and 18 will be synchronized according to the changes made to content on both sources and the resolutions applied to conflicts, see further below.

An apply operation resulting from modification of a source content may utilize change algorithms for applying any required changes to a target, e.g. a file, instead of sending the whole content to the target. This is especially efficient when transmitting content over a network. Such a change algorithm is rsync, which is widely used to distribute update changes to package software and can significantly reduce network bandwidth. rsync is a file transfer program for Unix systems and uses the "rsync algorithm" which provides a very fast method for bringing remote files into synchronization by sending just the differences in the files across the link, without requiring that both sets of files are present at one of the ends of the link beforehand.

Since the algorithm is neutral as to how meta-data on content is obtained and how content is accessed and applied, it is possible to synchronize between multiple content sources in a 1 to n, n to 1, or n to n fashion. This may be defined in the profile and a framework, external to the difference calculation and the apply, that defines efficient management of content accessing and modification.

Of course, any other algorithm for applying changes to files may be used.

In the following, with regard to Fig. 4a, individual operations of the difference calculation 14 in accordance with an embodiment of the invention will be outlined in further detail.

Based on comparing the client content with the cache and the server content with the cache, respectively, two states will be obtained. One of the states is associated with the comparison of a content item at the client with a cache item and the other is associated with a comparison of a content item at the server with a cache item. Thus, in an operation 401 a server state is obtained based on comparison of server content item and cache item and further, in an operation 402 a client state is obtained based on comparison of client content item and cache item. The respective content items may be directly compared but, preferably, only meta-data of the content items are compared, the meta-data indicating least one of the group consisting of a:
- relative path name;
- date last modified;
- profile index;
- content size;
- content type; and
- message digest.

The state of each content item may be unmodified, modified, deleted or added. The state "unmodified" indicates that a respective content item was not subject to a modification since the last synchronization. The state "modified" indicates that a respective content item was subject to a modification since the last synchronization. These states are determined, for example, based on meta-data regarding the respective content item. Further, the state "added" indicates that a respective content item was added since the last synchronization. Finally, the state "deleted" indicates that a respective content item was deleted since the last synchronization. The "added" state is, for example, detected if a content item is present in a content source but not present in the cache. Likewise, the "deleted" state is determined, if a content item is not present in a content source but present in the cache.

Based on the obtained states, i.e. the state of a content item of the client content source and/or the state of a content item of the server content source it is decided, which action need to be applied to the client content source and/or the server content source to obtain synchronization. The action can be to modify, add or delete a respective content item at one of the content sources.

More precisely, in an operation 403 it is determined whether the client state and server state is "unmodified". If this is the case, i.e. if the decision in operation 403 is "YES", no action is taken, as the server content source and the client content source are in a synchronized state regarding the present content item. The flow then proceeds to operation 401 to process the next content item, e.g. identified based on the profile.

If the decision in operation 403 is "NO", in an operation 405 it is determined whether the client state is "modified" and the server state is "unmodified". If this is the case, i.e. if the decision in operation 405 is "YES", in an operation 406 the content item at the server content source is modified based on the content item at the client content source. The modification may be effected by transmitting the modified content item from the client to the server for storage in the server content source by replacing the old content item thereat, or by applying the same changes to the content item at the server content source as they were applied to the content item at the client content source after the preceding synchronization. The same modification may also be applied to the cache, to also bring the cache to the synchronized state regarding the current content item. Then the flow proceeds to operation 401 to process the next content item.

If the decision in operation 405 is "NO", in an operation 407 it is determined whether the client state is "unmodified" and the server state is "modified". If this is the case, i.e. if the decision in operation 407 is "YES", in an operation 408 the content item at the client content source is modified based on the content item at the server content source. For example, similar to the above, a modification can be effected by transmitting the modified content item from the server to the client for storage in the client content source, replacing the old client content item, or by applying the same changes to the content item at the client content source as they were applied to the content item at the server content source after the preceding synchronization. The modification may also be applied to the cache, as above. Then the flow proceeds to operation 401 to process the next content item.

If the decision in operation 407 is "NO", in an operation 409 it is determined whether the client state is "added". If this is the case, i.e. if the decision in operation 409 is "YES", it is detected that the current content item was added since the last synchronization to the client content source and in an operation 410 the content item is added to the server content source, e.g. by transmitting the content item to the server for storage. Then the flow proceeds to operation 401 to process the next content item.

If the decision in operation 409 is "NO", in an operation 411 it is determined whether the server state is "added". If this is the case, i.e. if the decision in operation 411 is "YES", it is detected that the current content item was added since the last synchronization to the server content source and in an operation 410 the content item is added to the client content source, e.g. by transmitting the content item to the client for storage. Then the flow proceeds to operation 401 to process the next content item.

If the decision in operation 411 is "NO", in an operation 413 it is determined whether the client state is "deleted". Here it is assumed that the server state is unmodified, i.e. that there is no conflict between the states at the client and at the server. If this is the case, i.e. if the decision in operation 413 is "YES", it is detected that the current content item was deleted since the last synchronization from the client content source and in an operation 414 the content item is also deleted from the server content source. Then the flow proceeds to operation 401 to process the next content item.

If the decision in operation 413 is "NO", in an operation 415 it is determined whether the server state is "deleted". Here it is assumed that the client state is unmodified, i.e. that there is no conflict between the states at the client and at the server. If this is the case, i.e. if the decision in operation 415 is "YES", it is detected that the current content item was deleted since the last synchronization from the server content source and in an operation 414 the content item is also deleted from the server content source. Then the flow proceeds to operation 401 to process the next content item.

The two states can be viewed as input to a state machine, comprising part of the difference calculation, that generates an appropriate operation to be applied and proceeds accordingly through the next step, increasing the iteration of the inputs as required to obtain the state of the next content item. The state machine terminates when it has reached the end of all of the input iterations.

In an example, after all comparisons are made and appropriate actions took place, the content sources are in a synchronized state and this synchronized state is transferred to the cache for reference in subsequent synchronizations. In an alternative embodiment, when an action, as noted above, is applied to the server content source or client content source, the corresponding action is also applied to the cache, so that the cache will, step by step, reach the synchronized state.

Moreover, it is noted that initially there will be nothing in the cache, and the first synchronization of the client and server contents sources will involve copying the files and folders defined in the profile from the remote to the local storage areas. In any subsequent synchronization the cache, however, represents the status of the content sources at the time of the previous synchronization.

The meta-data on content can vary. In an example the minimum sufficient to identify change is the relative path name, date last modified and profile index, which is a unique ID for each entry in a profile. Other meta-data may be used to help identify change, such as message digest, content size and content type.

In the embodiment of Fig. 4a it is assumed that only one of the content item at the server content source and the content item at the client content source was altered (added, modified, deleted) since a last synchronization.

This is, however, not always and necessarily the case. Comparing states may also result in a conflict, such as if the same content item on both sources has been modified independently, or a content item was modified at one content source but deleted at the other, etc. Thus, if in operation 415 the decision is "NO", such a conflict occurred and in an operation 416 the conflict needs to be resolved, as it will be outlined further below.

Returning to Fig. 4, a correct synchronization requires that one of the content sources needs to be updated with the content from the other source. Thus, if a synchronization according to operations 401 - 415 of Fig. 4a is not possible, i.e. if a conflict occurred, the difference calculation 14 takes as input a conflict policy model 17 that defines how a conflict should be resolved given the conflicting state of the two content items. The conflict resolution will include identifying a survivor content item of one of the content sources and applying the same modification, addition or deletion to the other content source.

In an example the resolution is statically defined in the model, such that automatic resolution results in an appropriate operation. In an example a static conflict resolution includes defining the last accessed content item as survivor, i.e. the content item which was last accessed for modification, addition, deletion. Other criteria for selecting a survivor can be a priority indicator set by a user in association with a content item, with the higher priority indicator determining the survivor, or an identity of a user who has accessed the content item. For example, a system administrator or supervisor could be given superior rights.

In another example the conflict resolution may be dynamic. The latter will result in a callback to a user, who is able to decide externally on the resolution. This is indicated by Dynamic Conflict Resolution 23 in Fig. 4. The dynamic conflict resolution may be constituted by a program and/or hardware elements. This feature enables the user via, e.g., a graphical user interface (GUI) to decide how to resolve the conflict. The conflict data is defined as XML and may potentially be used to define resolutions for all aspects of content state. Thus fine control of synchronization may be achieved through this mechanism.

A specific example of synchronization between a remote source (a WebDAV server), and a local source (a file system on a laptop) will now be described to facilitate understanding of the hierarchical content synchronization algorithm.

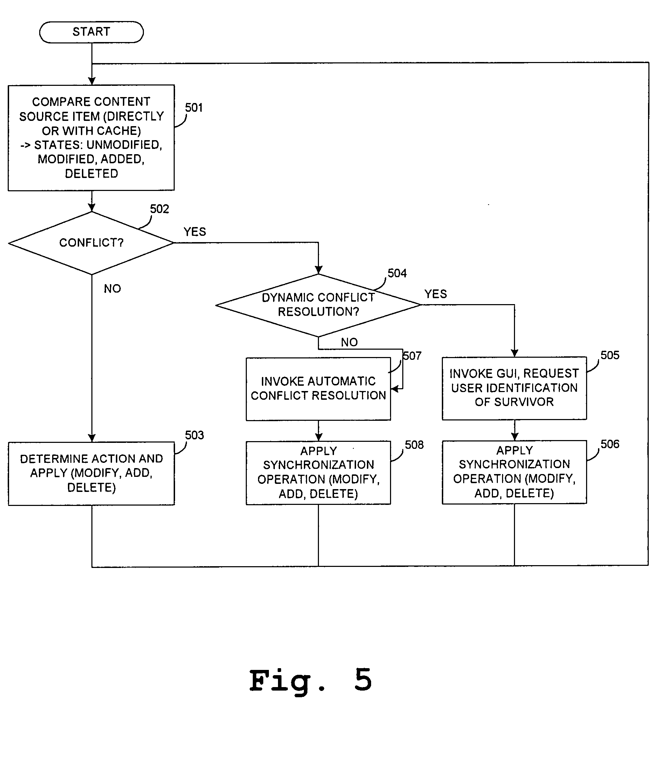

In the following a further embodiment of the invention will be described with respect to Fig. 5.

Fig. 5 shows operations of a method for synchronizing content at a client's content source and server content source, including a conflict resolution. The embodiment gives an overview over synchronization operations including a synchronization without conflict, such as outlined with regard to Fig. 4A and synchronization in the presence of conflicts, as outlined with regard to Fig. 4.

In a first operation 501 the content source items of the server content source and the client content source are compared. This comparison may either be direct, i.e. the respective content items or meta-data thereof maybe compared with one another, in order to identify a difference between the content items. Alternatively, the comparison may take place in view of a cache, i.e., as outlined before, a content item of the server content source may be compared with a corresponding content item of the cache and a content item of the client content source may be compared with a respective content item of the cache. Of course, if a content item has been added or deleted, the respective presence or absence of a content item in the cache or other contents source then determines the obtained difference between the content items. The presence or absence of a content item can be determined from a comparison of neighboring content items or an order of a content item in the cache and content sources, such as an alphabetical order or any other order.

In an operation 502 it is then determined whether a conflict is present. A conflict is present, if for example both the server content item and the client content item were modified, or the content item at one of the content sources was modified, while it was deleted at the respective other content source. Further, a conflict occurred, if both content items where added, i.e., if a respective content item was added to both of the content sources.

If in operation 502 the decision is "YES", indicating that a conflict occurred, in an operation 504 a determination is made whether a dynamic conflict resolution is required. If an operation 504 the decision is "YES", indicating that a dynamic conflict resolution is desired, in an operation 505 a graphical user interface is invoked, and a user identification of a survivor content item, i.e. the content item version taking precedence, to resolve the conflict is requested. The graphical user interface may be invoked dynamically, e.g. at the time when a conflict during synchronization occurred. The graphical user interface may be used to present, to a user, both versions of the content item under consideration and options to review the changes to the content items respectively applied and to make a determination of one of the content items which is to be used as a survivor during the synchronization operation.

In an operation 506 the synchronization operation is then applied to the respective content source and, optionally, also to the cache, to also bring the cache into the synchronized state.

If in operation 504 the decision was "NO", indicating that a dynamic conflict resolution is not desired, in an operation 507 an automatic conflict resolution is invoked. The automatic conflict resolution preferably does not involve any user interaction and uses a set of rules to determine a survivor content item to be used during the synchronization operation. As noted above, the rules may include determining a survivor content item based on a last modified date, a priority given by a user applying a modification, an identity of a user, e.g. involving a hierarchical list of user precedence, and similar.

If a conflict resolution bases on the set of rules is not possible, both content items could be stored for later conflict resolution, e.g. involving user guidance.

In an operation 508 the synchronization operation determined based on the automatic conflict resolution rule is applied.

If in operation 502 the decision was "NO", indicating that a conflict did not occur, in an operation 503 the appropriate action is determined and applied for synchronizing the content sources, e.g. as it was outlined with regard to Fig. 4 and Figure 4A.

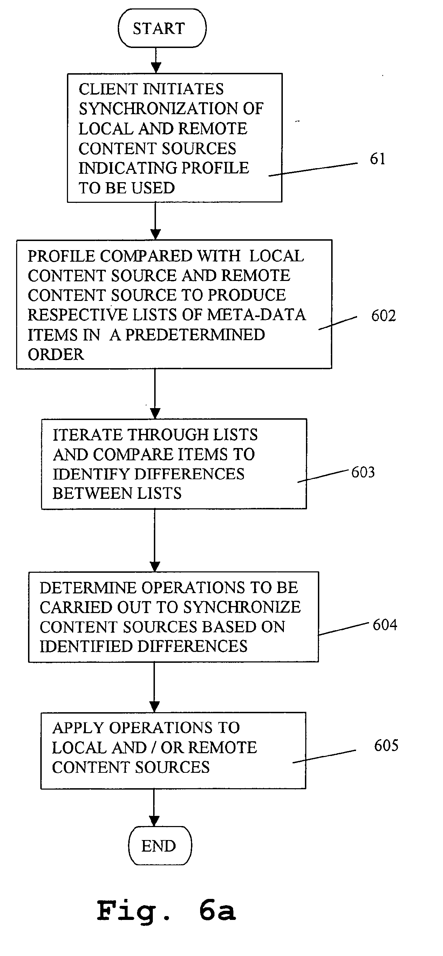

In the following a further embodiment of the invention will be described with respect to Fig. 6a.

Fig. 6a shows operations of a method for providing synchronization and for an initial synchronization of local and remote content sources.

Referring to Fig. 6a the operations in the method for providing an initial synchronization, that is before the cache holds any information comprise the client initiating synchronization in operation 601 of the local (client) and remote (server) content sources and indicating which profile is to be used.

In operation 602 the profile is compared with the client content source and the remote content source to produce respective lists of files and folders identifications and their meta-data which are in a predetermined order.

The lists are then compared in operation 603 item by item using a difference algorithm which identifies differences between them. Iteration is used to operation through the lists of the files and folders so that items with the same identifications can be compared, and for discarding items once considered. The difference algorithm also determines the operations which must be carried out to synchronize the two content sources as a result of the differences identified.

This is carried out in operation 604. Finally, in operation 605 the operations are carried out (applied) to the local and/or remote content sources in order to synchronize them. This will involve copying the files and folders in the profile from the remote to the local storage areas.

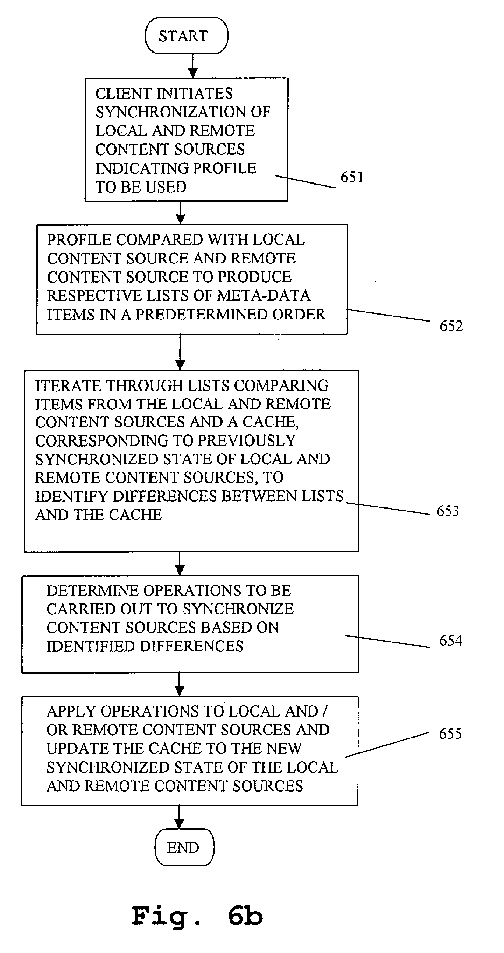

In Fig. 6b, the operations for the basic method of providing synchronization when the cache contains information is illustrated.

The cache may have been filled once the files and folders in the profile were copied from the remote to the local content source by copying the profile entries for the remote and the local content sources thereto.

As in the method of Fig. 6a, the first operation 651 is for the client to initiate synchronization of the local (client) and remote (server) content sources and indicating what profile should be used.

In operation 652, the profile is compared with the client content source and the remote content source to produce respective lists of files and folders identifications and their meta-data which are in a predetermined order.

The lists are then compared in operation 653 with themselves and a cache, corresponding to the previously synchronized state of the local and remote content sources, item by item, using a difference algorithm to identify differences between the lists and the cached lists. The cache items also have identities corresponding to the profile identities so that comparisons can be made. Iteration is used to operation through the lists and the cache so that the items with the same identities can be compared, and to discard items once considered.

The difference algorithm then determines in operation 654 what operations must be performed to synchronize the content sources as a result of the differences detected.

The necessary operations are carried out (applied) in operation 655 in order to synchronize the local and remote content stores and the cache is then updated to the new synchronized state of the local and remote content sources.

In an alternative when a conflict arises during item and cache comparison, it is resolved by a dynamic conflict resolution involving receiving at the user environment device an instruction determining the operation to be applied. The instruction determining the operation to be applied may be received from a user via a graphical user interface. Further, the operation may comprise one of a modify operation, an add operation and a delete operation.

As will be appreciated from the above, it is advantageous to define a profile (15 in Fig. 4) consisting of a pair of URIs which correspond to the remote and local locations where synchronization should occur.

In the following an example will be considered where the profile is chosen to be:
http://remote-host/fred.bloggs/ file:///offline/

The reference http://remote-host/fred.bloggs/ indicates a location at a remote content source, such as a server content source as outlined before. The reference file:///offline/ indicates a location at a local content source, such as a client content source. In the present case the local content source is considered to be a laptop computer. The local content source in the present case is considered to be a laptop local offline folder for offline work on content.

This above means that files and folders below the WebDAV accessible folder fred.bloggs are to be synchronized to the locally accessible folder (on the local file system) offline.

In general a profile may contain many folders and files and be from different remote and local locations. It depends on content access capabilities. This does not affect the difference calculation 14 or the generation of operations which are to be applied.

In addition, each entry in the profile has associated with it a unique identity (ID), that is a profile index, such that entries in the cache 21 can be associated with the respective profile entry. For example, this ID could be a digest of the two URIs concatenated. The ID is used to identify change in the cache and also to update the cache as deletions to the profile entries occur.

The profile is used by the content sources, in this case the remote and local sources 20 and 18, to locate files and folders for synchronization such that they can be passed to the difference calculation 14, via the iterators 22, in a content independent manner.

In this example the remote files and folders are as follows and are presented in reverse alphabetical order. The root URI http://remote-host/fred.bloggs/ has been omitted from each file/folder entry.
/project/fission/white-paper.pdf
/project/fission/todo.html
/project/fission/
/project/
/management/status-reports/john.doe/status.html
/management/status-reports/john.doe/
/management/status-reports/jane.doe/status.html/
/management/status-reports/jane.doe/
/management/status-reports/joe.smith/status.html
/managements/status-reports/joe.smith/goals.html
/management/status-reports/joe.smith
/management/status-reports/
/management/

There are no files and folders in the laptop local offline folder at the start of the first synchronization. Thus the first synchronization is equivalent to copying the files and folders from the remote to the local areas defined in the profile. It is essentially a simple repeated state of the difference calculation where files and folders are added. After the first synchronization a cache 21 will be generated. Some client devices, such as workstations, may require to synchronize a large set of files and folders, in which case for the initial synchronization it may be more efficient to send a zip or tar file of the requested files and folders.

The cache reflects the state of the synchronized remote and local files and folders. It consists of a pair of tuples corresponding to the remote and local files and folders. Each tuple will consist of a URI, some meta-data and the profile index (ID). It should be noted that there are many ways for efficient storage of the cache such that duplicate information, for example the root URI and ID, are removed. The meta-data will consist of such things as date last modified, message digest of content. The meta-data represents the state of the file or folder so that this state may be compared with the state of the file or folder when performing a further synchronization.

The cache 21 stores entries that have been generated from the operations of the difference calculation and applied.

It is only possible to obtain some states, such as date last modified, when actually applying an operation to the content and hence the cache, can only be updated when the operations have been applied. In an example the order of the entries in the cache 21 are associated with the order in which the operations have been generated and applied, and this will depend on the order in which the files and folders have been passed to the difference calculation 14. However, of course, any other order of entries is coneivable.

The cache 21 may be accessed by a respective iteration 22, in a like manner to the accessing of the remote and local content sources, but each entry of the cache contains a pair of tuples.

The difference calculation 14 employs three sources of input abstracted from the respective source of content (remote, local, cache) using iterations. The remote content source 50 (WebDAV) the local content source 18 (local file system), and the cache 21 (a file on the local file system), are all accessed in the same way by the difference calculation by iterating over each source. Thus the difference calculation (difference algorithm) is independent of the type of content access.

To compare files and folders correctly, the difference algorithm relies on the content sources providing files and folders in a predetermined order, in particular in alphabetical order. This ensures that it can correctly identify deletions and additions since file and folder names may be in a different order in the sources. For example, current WebDAV employs the order of creation or the order is dependent on the underlying operating system. The files and folders can be differentiated by the folder names having a trailing "/".

In the example, some of the local and remote files have been modified and some new files have been added.

The remote content consists of:
/*project*/*fission*/*white-paper.pdf*
/project fission/todo.html
**/project/fission/reference.html**
/project/fission
/project/
/*management*/*status-reports*/*john.doe*/*status..html*
/management/status-reports/john.doe/
/*management*/*status-reports*/*jane.doe*/*status.html*
/management/status-reports/jane.doe/
/management/status-reports/joe.smith/status.html
/management/status-reports/joe.smith/goals/html
/management/status-reports/joe.smith/
/management/status-reports/
/management

Items in italics correspond to content that has been modified. Bold underlined items correspond to content that has been added.

The local content consists of:
/*project*/*fission*/*white-paper.pdf*
/project/fission/todo.html
/project/fission/
/project/
/management/status-reports/john.doc/status.html
**/management/status-reports/john.doc/goals..html**
/management/status-reports/jane.doc/status.html
/management/status-reports/jane.doc/goals.html
/*management*/*status-reports*/*joe.smith*/*goals.html*
/management/status-reports/joe.smith/
/management/status-report/
/management/

The cache will consist of item pairs corresponding to the remote and local content at the first synchronization and in the same order.

Considering now just files, for the sake of simplicity, in the following table the items of the three content sources are shown in respective columns. For brevity only some of the file path name is used.

**Table I**

| Remote | Local | Cache |
|---|---|---|
| | *fission*/*white-paper.html* | |
| *fission*/*white-paper.html* | fission/todo.html | |
| fission/todo.html | john.doe/status.html | fission/white-paper.html |
| **fission/reference.html** | **john.doe/goals.html** | fission/todo.html |
| *john.doelstatus.html* | jane.doe/status.html | john.doe/status.html |
| *jane.doe*/*status.html* | jane.doe/goals.html | jane.doe/status.html |
| joe,.smith/status.html | joe.smith/status.html | joe.smith/status.html |
| joe.smith/goals.html | *joe.smith*/*goals.html* | joe.smith/goals.html |

Initially the difference algorithm will take the item from the bottom of each column and compare their URIs and meta-data. As these three URIs in Table I are the same for the remote, local and cache comparison of their URIs indicates that the same item is being considered. However, comparison of the meta-data data last modified from the local source with that of the cache indicates that the local file has been modified. By comparing the corresponding remote data with that in the cache it is apparent that the remote file has not been modified. Thus an operation should be created to modify the remote file such that it contains the content of the local file. Since the three items refer to the same URI, or rather the same relative paths of the URI, they can be discarded and the next three items considered.

**Table II**

| Remote | Local | Cache |
|---|---|---|
| | | |
| | *fission*/*white-paper.html* | |
| *fission*/*white-paper.html* | fission/todo.html | |
| fission/todo.html | john.doe/status.html | fission/white-paper.html |
| **fission/reference.html** | **john.doe/goals.html** | fission/todo.html |
| *john*.*doe*/*status.html* | jane.doe/status.html | john.doe/sttaus.html |
| *jane.doe*/*status.html* | **jane.doe/goals.html** | jane.doe/status.html |
| joe.smith/status.html | joe.smith/status.html | joe.smith/status.html |

The last item in all three columns of Table II has the same URI and no modifications have taken place in either the remote or local file. Therefore, all three items may be discarded and no operations are required. The next three items can now be considered.

**Table III**

| Remote | Local | Cache |
|---|---|---|
| | | |
| | | |
| | *fission*/*white-paper.html* | |
| *fission*/*white-paper.html* | fission/todo.html | |
| fission/todo.html | john.doe/status.html | fission/white-paper.html |
| **fission/reference.html** | **john.doe/goals.html** | fission/todo.html |
| *john.doe*/*status.html* | jane.doe/status.html | john.doe/status.html |
| *jane.doe*/*statits.html* | jane.doe/goals.html | jane.doe/status.html |

When examining the next three items in Table III, it is apparent that the URIs do not match. The local URI is different from the cache and the remote. This means that the local file is new and was added after the last synchronization. The difference algorithm knows this because the files are obtained from all sources in the predetermined order (alphabetical in this case) having been sorted by URI. In this case an add operation is created to add the file from the local content source to the remote content source and the cache. Only the item from the local column is discarded, even though it is known that the remote file, referring to a different file to the local column, has been modified.

**Table IV**

| Remote | Local | Cache |
|---|---|---|
| | | |
| | | |
| | | |
| *fission*/*white-paper.html* | *fission*/*white-paper.html* | |
| fission/todo.html | fission/todo.html | fission/white-paper.html |
| **fission/reference.html** | john.doe/status.html | fission/todo.html |
| *john*.*doe*/*status.html* | **john.doe/goals.html** | john.doe/status.html |
| *jane*.*doe*/*status.html* | jane.doe/status.html | jane.doe/status.html |

Now all three URIs for the three items of Table IV at the bottom of the columns correspond to the same file, but the remote file has been altered and so an operation to modify the local content to correspond to the remote content must be created. This operation could not be created at the last iteration (Table III) because it could not be determined if the local content had been modified or not. All three items at the bottom of the columns can now be discarded, producing Table V.

**Table V**

| Remote | Local | Cache |
|---|---|---|
| | | |
| | | |
| | | |
| | | |
| *fassion*/*white-paper.html* | *fissionwhite-paper.html* | |
| fission/todo.html | fission/todo.html | fission/white-paper.html |
| **fission/reference.html** | john.doe/status.html | fission/todo.html |
| *john.doe*/*status.html* | **john.doe/goals.html** | john.doe/status.html |

This is the same as the last but one case in that a file has been added to the local content. Again an add operation is created to add the local file to the remote content and the item from the local content column is discarded, producing Table VI.

**Table VI**

| Remote | Local | Cache |
|---|---|---|
| | | |
| | | |
| | | |
| | | |
| *fission*/*white-paper.html* | | |
| fission/todo.html | *fission*/*white-paper.html* | fission/white-paper.html |
| **fission/reference.html** | fission/todo.html | fission/todo.html |
| *john*.*doe*/*status.html* | john.doe/goals.html | john.doe/status.html |

This state is the same as the last but one. A modify operation is created to modify the local content to correspond to the remote content and all three items at the bottom of the columns are discarded, producing Table VII.

**Table VII**

| Remote | Local | Cache |
|---|---|---|
| | | |
| | | |
| | | |
| | | |
| | | |
| *fission*/*white-paper.html* | | |
| fission/todo.html | *fission*/*white-paper.html* | fission/white-paper.html |
| **fission/reference.html** | fission/todo/html | fission/todo.html |

A new file has been added to the remote content source. Hence it is necessary to create an add operation to add the file to the local content. The file item can then be discarded from the remote content column, producing Table VIII.

**Table VIII**

| Remote | Local | Cache |
|---|---|---|
| | | |
| | | |
| | | |
| | | |
| | | |
| | | |
| *fission*/*white-paper.html* | *fission*/*white-paper.html* | fission/white-paper.html |
| fission/todo.html | fission/todo.html | fission/white-paper.html |

The items all have the same URI, there are no changes and all items can be discarded, producing Table IX.

**Table IX**

| Remote | Local | Cache |
|---|---|---|
| | | |
| | | |
| | | |
| | | |
| | | |
| | | |
| | | |
| *fission*/*white-paper.html* | *fission*/*white-paper.html* | fission/white-paper.html |

The same URI is being referred to by all items, but both the remote file and the local file have been modified. This is a conflict and needs to be resolved so that an appropriate operation can be created. There are four possible choices.
1. Remote copy takes precedence.
2. Local copy takes precedence.
3. Copy remote to a new file and local takes precedence.
4. Copy local to a new file and remote takes precedence.

The first two options will result in modify operations and the latter two will result in modify and add operations. What occurs is detailed by the conflict policy 17, which could result in a user deciding which operation to create or it being defined explicitly. After resolution all items may be discarded. Since all three columns are then empty, the difference algorithm has finished.

In general there are four states that a file or folder may be in; unmodified, modified, added or deleted. These may result in three types of operation: modify, add or delete.

In the above example the operations in the order they are created by the difference algorithm are as follows:

| | |
|---|---|
| Modify local to remote | joe.smith/goals.html |
| Add local to remote | jane.doe/goals.html |
| Modify remote to local | jane.doe/status.html |
| Add local to remote | john.doe/goals.html |
| Modify remote to local | john.doe/status.html |
| Add remote to local | fission/reference.html |
| Modify remote to local | fission/white-paper.html |

The last operation has resulted from a conflict resolution where the remote copy takes precedence.

When applying the operations it is necessary to update the cache. Each operation has associated with it the cache index, which is related to the location in the cache where the operation was generated. This allows the apply algorithm 2 to iterate through the cache, adding new cache entries and modifying existing ones accordingly.

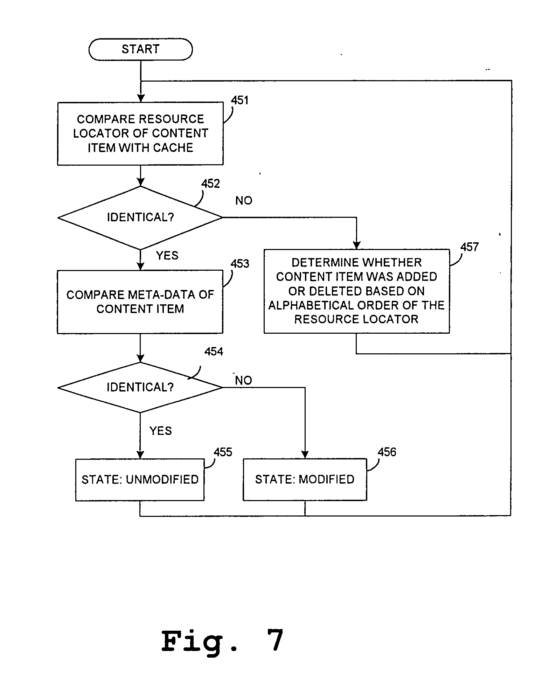

In the following a further embodiment of the invention will be required with regard to Fig. 7.

Fig. 7 illustrates a flow chart for determining the status of a content item in the content sources, i.e. the server content source and the client content source.

As noted before, the states of a content item can be:
unmodified; modified; added and deleted. The status of the content item can be determined based on a comparison of a resource locator of the content item in one of the content sources and the cache, and by further comparing meta-data of the content item, as further detailed below. That is, in an example the resource locators of the server or client content source items are respectively compared with the cache and, if the resource locators are the same, the meta-data thereof are compared to determine whether the content item was modified. Further, if the resource locators are not the same, the order of the server or client content source item and the cache are compared to determine whether the content item was added or deleted.

In Fig. 7, in an operation 451 a resource locator of a content item is compared with the cache. As outlined before, the cache will include a pair of resource locators, one for the server content item and one for the client content item. This operation 451 can thus analogously be applied to the server content source and the client content source and, for simplicity reasons, it is in the following only referred to "content item", this content item being a server content item or client content item.

As also outlined before, and further detailed in the previous example, the resource locators of the server content source, client content source and cache are organized in an alphabetical order. The comparison operation thus can conveniently make a comparison between respective last items in respective tables, see tables I - IX.

In an operation 452 it is then determined whether the resource locators of the content item in the respective content source an the cache are identical, and if the decision is "yes", indicating that the resource locators are identical, the meta-data of the content item are compared. More preciously, the meta-data of the content item associated with the content source and the meta-data of the content item stored in the cache, pertaining to the last synchronized state, are compared.

In an operation 454 it is then determined whether the meta-data of the content item are identical, and if the decision is "yes", in an operation 455 the state of the content item is identified as "unmodified". It is noted that this sequence of operations can pertain to a content item of the server content source or a content item of the client content source.

In an operation 454 the decision is "no", indicating that the meta-data of the content item under consideration are not identical, in an operation 456 the status of the content item is determined as "modified".

Further, if in operation 452 the decision was "no", identifying that the resource locator stored in the cache is not equal to the resource locator of the content item of the content source, in an operation 457 it is identified that the status of the content item is "added" or "deleted". Further, in operation 457 it is then determined whether the content item was added or deleted based on an investigation of the order of the resource locator pertaining to the content item under consideration, e.g. alphabetical or any other order. As noted before, the lists of the content items of the content source, i.e. the server content source or client content source, and the list of the content items in the cache are in a specific, in the present example in alphabetical order, and thus it can be determined based on a comparison of the alphabetical orders whether the content item was added or deleted.

More preciously, if the resource identifier of the content item of the content source in alphabetical order is less than the resource identifier of the cache in alphabetical order, then it is determined that the status of the content item is "added". Likewise, if in the comparison of the alphabetical orders of the content items in the content source and the cache shows that the alphabetical order of the content item in the cache is less then the alphabetical order of the content item in the content source, then it is known that the content item still present in the cache was deleted in the content source and the state of the content item can be identified as "deleted".

The above operations 455, 456 and 456 lead to the determination of the status of the content item of one of the content sources, i.e. the server content source or client content sources, as unmodified, modified, added or deleted.

Based on the status determined for the content items one of the activities to be executed with regard to the content item is selected, i.e. whether a modify operation has to be carried out, an add operation or a delete operation, in order to obtain a synchronized state, as outlined before.

In the following a example will be described further showing possible combinations of the status of the server content source and the client content source regarding a particular item.

Given that there are four states associated with a file or folder, it is possible for there to be 16 state combinations that may result in iteration through one or more content sources. In the following state table, U stands for unmodified, M stands for modified, D stands for deleted and A stands for added.

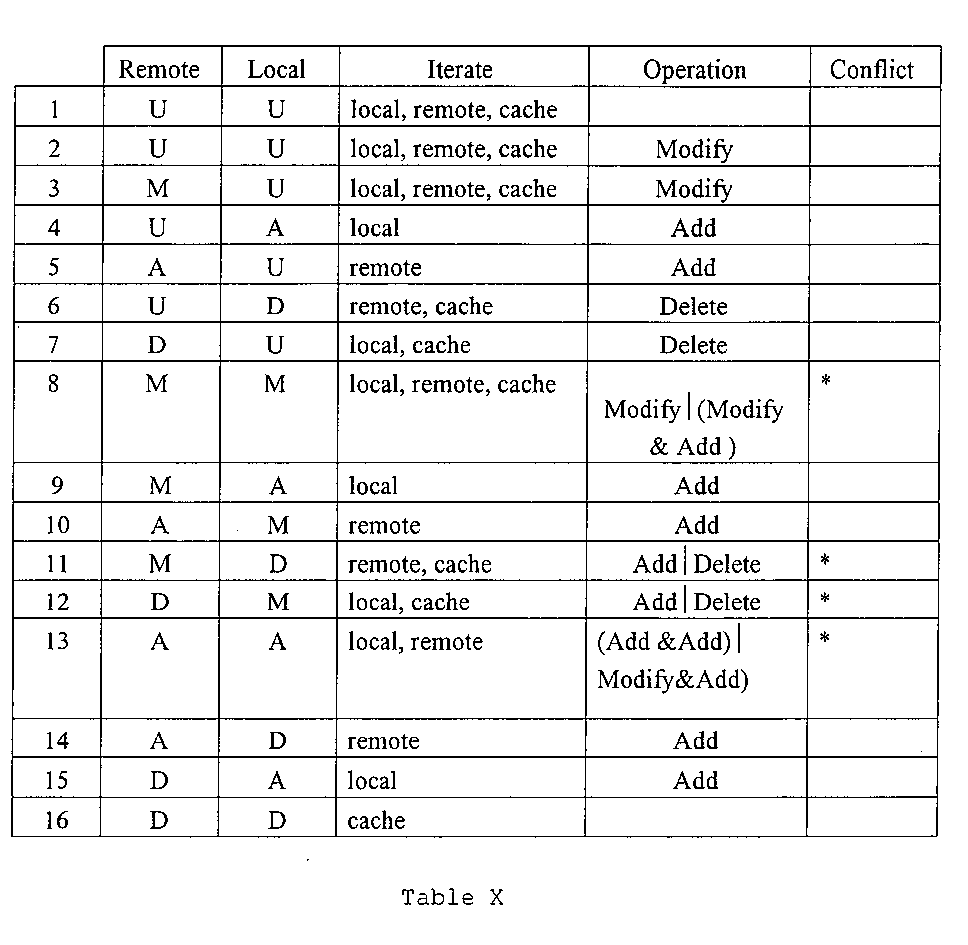

The state table above defines what iteration and what operation is required for a given pair of states. The states resulting in conflict, as indicated in the last column, may result in different operations, depending on how the conflict is resolved.

Other types of pairs of states can also be set as resulting in conflicts, if so required. For example, deletion of local content may not result in deletion of remote content.

Since not all content is iterated through for each content source, a partial state transition may result. For example, the D: A state results in an iteration on the local source only and an Add operation for adding the local content to the remote. Transition will result to one of the following pair states: D: D, D: M, D:U, D: A based on new information from the local source.

The operation of the difference algorithm and its state table will now be further explained. The first item from a first content source corresponding to a first profile requirement, the first item from a second content source corresponding to the first profile requirement and the first pair of items from the cache corresponding to the first profile requirement are selected. The URIs of these items are compared. If the URIs are all the same, then the meta-data is compared.

If the meta-data for the first item for the first content source equals that for the cached item corresponding to this first item, there has been no change to this first item. If it is not the same, the first item of the first content source has changed and an operation to modify the second content source will be needed for synchronization. If the meta-data for the first item for the second content source equals that for the cached item corresponding to this first item, there has been no change to this first item. If it is not the same, the first item of the second content source has changed and an operation to modify the first content source will be needed. This is described in rows 2 and 3 of the State Table X.

If the meta-data of the first item of the first content source is equal to the meta-data of the first item of the second content source and equal to the cached values, neither the first nor the second content sources have been modified so no operation is necessary (row 1 of Table X). For all three states discussed so far, the lists pertaining to the first and second content sources and the cache can all be iterated and the next items considered.

If the meta-data of the first item of the first content source is equal to the meta-data of the first item of the second content source but neither is equal to the respective cache values, then both first items have been modified and conflict resolution will be necessary with an appropriate operation employed. This corresponds to row 8 of Table X, and all three items iterated.

If the URIs are not the same, then it must be determined if this is due to an addition of an item or a deletion of an item in one or more of the first and second content sources. Since the lists are in a predefined order, in particular alphabetical, then it is an easy matter to determine what has happened. If the URI of the first item of the first source is different to the URI of the first item of the second source and to the cached items and is less than the cache URI in alphabetical order then this first item is an addition and an operation will be needed to add that item to the second content source and update the cache. This also requires the first item of the first source to be iterated so that the second item can be considered. The opposite situation, that is the first item of the second source may be the different item and be an added item, may also pertain. These correspond to rows 4 and 5 of the State Table X. If an item has been added to one content source, and the item of the other content source has been modified the item addition will take precedence, rows 9 and 10 of the State Table X, and the resultant conflict of modified items handled as appropriate as in row 8 of the State Table X.

Correspondingly, if the URI of the first item of the first source is different to the URI of the first item of the second source and to the cached items and is greater than the cache URI in alphabetical order, then this first item signifies a deletion, and an operation will be needed to delete that item from the second content source, and iterate the cache and the second content source. Similarly if the deleted item is from the second content source, the first content source will require a deletion. See rows 6 and 7 of the State Table. If an item has been deleted and the other modified, a conflict policy pertains as indicated in rows 11 and 12 of Table X, with the possibility of an addition or a deletion.

If the cached item URIs are different to both the first item of the first source and the first item of the second source, then additions to the first and second sources have been made if they are lower alphabetically to the cached values, but a conflict policy will need to be followed to determine what operations should be performed, row 13 of the Table X.

If the cached item URIs are different to the first item of the first source and the first item of the second source and one of the latter is less than the cached value in alphabetical order then the one is iterated and an operation to add that item to the other source is calculated, rows 14 and 15 of Table X.

Finally, if the cache is different to the first item of the first source and the first item of the second source and less than both in alphabetical order, then the cache is iterated and both the first and second sources have had deletions, row 16 of Table X, but since it is a deletion on both sides it is not a conflict situation.

The above difference algorithm with its associated state table can be coded very efficiently using JAVA, for example, and resulting in facilitation of application to small devices such as PDAs as well as laptops used as clients. (JAVA is a registered trade mark of Sun Microsystems, Inc., in the United States and other countries).

The above specific example does not present examples of folder manipulation but similar concepts apply, except that modification date does not make sense with respect to most file/folder content access systems. Since the cache stores both file and folder information, unmodified, deleted and added state may be observed. The deleted state can result on an efficiency as it is not required to send delete operations on a per child file basis to remote content, thus speeding up the operation for slow network access. This obviously depends on whether any child files of the undeleted side have been modified or not.

Renaming of files and folders is observed by the difference algorithm as deleted and add operations.

Conflict policies can be defined in an XML file.

As already mentioned, since the difference algorithm creates modify operations, it is possible for the apply of a modify operation to use standard change algorithms such as rsync, which is widely used to distribute update changes to package software and can significantly reduce network bandwidth. For example, the rsync algorithm and the rproxy transport protocol as an extension to a WebDAV server can be implemented at the client. rproxy integrates rsync and HTTP, and provides a way to significantly reduce network bandwidth usage by keeping a cache near the client holding the last known version of a page or other resource. Each time the resource is requested, only the changes from the cached state need be sent across the network. The resource is always delivered live to the client; but the transfer time and traffic is greatly reduced.

As will be appreciated, under certain operating conditions, for example, it may be required to synchronize different files and folders. Less or more files and folders may be required in certain circumstances for different devices or different users. This can be readily taken care of by users defining different profiles pertaining to different conditions and then the user selecting the appropriate profile to be employed for a particular synchronization. Potentially there can be many profiles per client with the same or different servers. For example, a user could choose a selection of profiles from a set to synchronize to a specified server depending on what files and folders they require. Alternatively, a user could require to synchronize multiple files and folders from many different servers, for example WebDAV servers.

As discussed earlier, using a history of content accesses allows to generate a profile from files and folders browsed. Hence every time a file or folder content is obtained from a WebDAV server and stored locally, the remote and local locations could be added to a special history profile. This profile can then be used to synchronize the files and folders. In addition, this profile also may be reused for later synchronizations without having to explicitly browse the same files and folders. Generating profiles using such a dynamic approach is advantageous particularly for small devices, such as palmtops, which generally have only limited resources and may for example only download files that are associated with a particular set of applications. Generating a profile based on a history of accesses the user can select what files are desired for synchronization, rather than referring to a complete file system, which would include flattening a large hierarchy to list only the files, some of which may have the same file name and some of which may not be able to be converted to the client device. Once a user has selected the files, the set of files can be referred to later on by selecting the profile generated from the history.

Furthermore, resolving file and folder conflicts before synchronization, as in the present proposal, is advantageous. Since it is not required to store a history of conflicting add/replace/delete operations with the associated content. To correctly calculate and formally describe conflicts on hierarchical data, it is necessary to compare the hierarchy fully as in the present proposal, otherwise file and folder changes to one hierarchy may be sent which incorrectly reference another hierarchy, if both have been changed independently. For example, in the case when a user of a device modifies a file and the parent directory of the corresponding file is moved to another location or renamed in the centralized storage on the server. Full hierarchical comparison may resolve where the file resides on the server so that it can be updated.

Whereas in the above example a list of operations is generated before any of them are applied, in an alternative arrangement each operation may be applied as it is created.

The difference algorithm is adaptable and sufficiently efficient to be applied to smaller client devices, such as palmtops, as well as larger devices such as laptops. With the algorithm executed in client devices, as described, server side content access servers, such as HTTP and WebDAV servers, require no modification. Thus standard protocols such as WebDAV and standard procedures such as rsync and rproxy can be used without any modification to the server. The advantage of the client performing the difference calculation is that no special service is required to perform differences and inform the client what to do. It is possible to extend the content accessing and applying to efficiently synchronize content from many sources to many targets. The difference algorithm is not affected. Thus it is possible to substitute many types of content accessing and applying strategy. The profile is easy to generate from an explicit GUI or by recording the history of user downloaded content, as discussed above. This latter may be considered as implicit first synchronization. The cache provides a simple and efficient mechanism to determine whether files have been modified, added or deleted. Since the order of items in the cache is defined by the order of items accessed by the content sources, there is no need for searching of the cache.

A particular advantage of the difference algorithm proposed is that it is very small and lightweight and has proved to be especially easy and quick to code. It is a compact lightweight differencing algorithm that involves extraction from content, has a small memory footprint and low processor requirements and is, therefore, particularly appropriate for small devices. In practice the algorithm may not have data arranged in adjacent lists as shown in the above example for illustration purposes, rather each item of a particular content source can be extracted in turn, in accordance with the profile, by the iteration process and compared to the items extracted from the other content source and the cache by their respective iteration processes. The items are obtained dynamically using, for example, "get" and "getNext" instructions for the items. In view of the abstraction of data approach, the difference algorithm is independent of the type of content access.

Appropriate software coding can be readily prepared by skilled programmers based on the teachings of the present disclosure, as will be apparent to those skilled in the art. A computer-readable medium may be provided having a program embodied thereon, where the program is to make a computer or data processing device execute at least the difference algorithm and state table function described above. A computer readable medium can be a magnetic or optical or other tangible medium on which a program is recorded, but can also be a signal, e.g. analog or digital, electromagnetic or optical in which the program is embodied for transmission. The computer-readable medium may constitute a data stream embodying the program. Further, the computer-readable medium may constitute a data structure embodying the program. Further, a computer program product may be provided comprising the computer-readable medium.

Although methods and systems consistent with the present invention have been described with reference to a specific embodiment thereof, those skilled in the art will know of various changes in form and detail which may be made without departing from the present invention as defined in the appended claims and their full scope of equivalents.

It is noted that a program or programs may be provided having instructions adapted to cause a data processing device or a network of data processing devices to realize elements of the above embodiments and to carry out the method of at least one of the above operations. Further, a computer readable medium may be provided, in which a program is embodied, where the program is to make a computer execute the method of the above operation.

Also, a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

According to another embodiment of the invention, a server side component may have the following configuration.
1) A computing device adapted to communicate with a remote computing device, the computing device including: a content source; a memory for storing a synchronization program having a code sequence including instructions to detect differences between content stored in said content source and another content source, a code sequence having instructions to determine operations to be applied to said content sources to achieve content synchronization, and a code sequence having instructions to apply the operations; and a processor for running the code sequences of the synchronization program.
2) A computing device of 1) including a code section having instructions to initiate the synchronization.
3) A computing device of 2), including a code section having instructions to store a profile defining said selected portions of the content sources.
4) A computing device of 3) including a code section having instructions to store, in a cache, details of a previously synchronized state of the user environment and server content sources.
5) A computing device of 4) wherein the synchronization program comprises: a code sequence having instructions to compare a said profile with the user environment and server content sources; a code sequence having instructions to produce respective lists of meta-data items in a predetermined order of the content to be synchronized for each content source; a code sequence having instructions to iterate through the lists and compare the items thereof and the cache, a code sequence having instructions to identify differences between the lists and the cache; a code sequence having instructions to determine the said operations in dependence on the identified differences; a code sequence having instructions to apply the said operations to the user environment and/or server content sources; and a code sequence having instructions to update the cache to the resultant new synchronized state of the user environment and server content sources.
6) A computing device of 5) including a code section having instructions to perform at least one of
   - a modify operation;
   - an add operation; and
   - a delete operation.
7) A computing device of 1), and including a graphical user interface program including a code sequence having instructions to generate said profile.
8) A computing device of 5) wherein the synchronization program includes a code section having instructions to resolve conflicts arising during item and cache comparison in accordance with a predetermined conflict policy that indicates the respective operation to be applied.
9) A computing device of 1), including code sections having instructions to communicate with a server device and including an authoring facility.

## Claims

1. A method of synchronizing content between a local content source and a remote content source, disposed at a user environment device and a server device, respectively, including:
indicating a profile identifying the content to be synchronized;
comparing the profile with the local and remote content sources;
identifying differences between the local and remote content sources; and
in dependence on the identified differences, synchronizing the content of the content sources.

2. A method as claimed in claim 1, wherein synchronization is initiated at the user environment device.

3. A method as claimed in claim 1,
including producing, during comparing the profile with the local and remote content sources and for each content source, a respective list of meta-data items, in a predetermined order, relating to the content to be synchronized;
iterating through the lists and comparing the meta-data items thereof to identify the differences therebetween;
in dependence on the identified differences, determining operations to be carried out to synchronize the content of the content sources; and applying the determined operations to the local and/or remote content sources.

4. A method as claimed in claim 3, wherein the meta-data items include at least one of the group consisting of:
- relative path name;
- date last modified;
- profile index;
- content size;
- content type;
- message digest.

5. A method as claimed in claim 3, wherein the comparison of the lists include comparing the meta-data items thereof and a cache, the cache corresponding to a previously synchronized state of the local and remote content sources, to identify differences between the lists and the cache.

6. A method as claimed in claim 5 and including updating the cache to the resultant new synchronized state of the local and remote content sources.

7. A method as claimed in claim 5 or claim 6, wherein the cache is maintained locally at the user environment device.

8. A method as claimed in one of the claims 5 to 7, including
comparing resource locators of the server or client content source with the cache;
if the resource locators are the same, comparing the meta-data thereof to determine whether the content item was modified; and
if the resource locators are not the same, comparing the order of the server or client content source and the cache to determine whether the content item was added or deleted.

9. A method as claimed in one of the claims 5 to 8, and wherein a conflict arising during item and cache comparison is resolved by use of a predetermined conflict policy that indicates the operation to be applied.

10. A method is claimed in one of the claims 5 to 8, wherein a conflict arising during item and cache comparison is resolved by a dynamic conflict resolution involving receiving at the user environment device an instruction determining the operation to be applied.

11. A method as claimed in claim 10, including receiving the instruction determining the operation to be applied via a graphical user interface.

12. A method as claimed in one of the claim 9 to 11, wherein the operation comprises one of:
- a modify operation;
- an add operation; and
- a delete operation.

13. A method as claimed in claim 1, wherein indicating a profile comprises selecting a profile from a set thereof.

14. A method as claimed in claim 1, wherein indicating a profile comprises choosing a selection of profiles from a set thereof.

15. A method as claimed in claim 1, including receiving an indication of a profile via a graphical user interface.

16. A method as claimed in claim 1, including generating the profile employing a graphical user interface at the user environment device.

17. A method as claimed in claim 1, wherein the profile is generated from a history of content downloaded by a user to the user environment device.

18. A method as claimed in claim 1, wherein the profile is used to select the local and remote content to be compared.

19. A method as claimed in claim 1, wherein the content is hierarchical file and folder content.

20. A method as claimed in claim 1, wherein the local content source is a file system in memory and the remote content source includes at least one of a network file system and a database.

21. A method as claimed in claim 1 wherein the user environment device is a client device including at least one of:
- a laptop computer;
- a palmtop computer; and
- a personal digital assistant.

22. A method as claimed in claim 1, wherein the user environment device uses a communication program for communicating with the server device, including an authoring facility.

23. A method as claimed in claim 1, wherein the authoring facility is WebDAV.

24. A method as claimed in claim 1 wherein the server device is one of a WebDAV server and an HTTP server.

25. A data processing device including:
a user environment content source connectable to a server device having a server content source at least for synchronization of the user environment and server content sources;
a memory, comprising a synchronization program for detecting differences between selected portions of the user environment and server content sources and determines operations to be applied to the user environment and server content sources to achieve synchronization, and applying the operations; and
a processor that runs the synchronization program when the user environment device and server device are connected and synchronization is initiated.

26. A data processing device as claimed in claim 25, wherein the synchronization program is for initiating the synchronization.

27. A data processing device as claimed in claim 26, further including:
profile storing means containing a profile defining said selected portions of the content sources to be submitted to the synchronization program for difference detection.

28. A data processing device as claimed in one of the claims 26 and 27, further including a cache storing details of a previously synchronized state of the user environment and server content sources.

29. A data processing device as claimed in claim 28, wherein the synchronization program serves to:
compare a said profile with the user environment and server content sources;
to produce respective lists of meta-data items in a predetermined order of the content to be synchronized for each content source;
to iterate through the lists and compare the items thereof and the cache, to identify differences between the lists and the cache;
to determine the said operations in dependence on the identified differences;
to apply the said operations to the user environment and/or server content sources; and
to update the cache to the resultant new synchronized state of the user environment and server content sources.

30. A data processing device as claimed in claim 29, wherein said operation comprises at least one of:
- a modify operation;
- an add operation; and
- a delete operation.

31. A data processing device as claimed in claim 28, wherein the synchronization program serves to:
compare resource locators of the server or client content source with the cache;
compare the meta-data thereof, if the resource locators are the same, to determine whether the content item was modified; and
compare the order of the server or client content source and the cache, if the resource locators are not the same, to determine whether the content item was added or deleted.

32. A data processing device as claimed in one of the claims 29 to 31, wherein the meta-data items include at least one of the group consisting of:
- relative path name;
- date last modified;
- profile index;
- content size;
- content type;
- message digest.

33. A data processing device as claimed in one of the claims 25 to 32, constituted by one of:
- a laptop computer;
- a palmtop computer; and
- a personal digital assistant.

34. A data processing device as claimed in one of the claims 27 to 33, including a graphical user interface to generate said profile.

35. A data processing device as claimed in one of the claims 28 - 34, wherein the synchronization program further serves to resolve conflicts arising during item and cache comparison in accordance with predetermined conflict policies that indicate the respective operation to be applied.

36. A data processing device as claimed in one of the claim 28 - 35, including a graphical user interface for resolving a conflict arising during item and cache comparison by indicating the operation to be applied.

37. A data processing device as claimed in claim 25 wherein the user environment content source is a file system in the memory.

38. A data processing device as claimed in claim 25, connectable to one of a WebDAV server and an HTTP server including at least one of a network file system and a database.

39. A data processing device as claimed in claim 25, wherein the content sources store hierarchical data pertaining to files and folders.

40. A data processing device as claimed in claim 25, comprising a communication program including an authoring facility.

41. A data processing device as claimed in claim 25, wherein the authoring facility is a WebDAV protocol.

42. A program having instructions adapted to carry out the method of any one of claims 1 to 24.

43. A computer readable medium, in which a program is embodied, wherein the program is to make a data processing system, including a user environment device and a server device, execute the method of any one of claims 1 to 24.

44. A computer program product comprising the computer readable medium of claim 43.
